# EUROPÄISCHE PATENTANMELDUNG

(11) **EP 0 985 631 A1**
(43) Veröffentlichungstag der Anmeldung: **15.03.2000**
(21) Anmeldenummer: 99116646.3
(22) Anmeldetag: 26.08.1999
(51) Int. Cl.: B66F 7/22, B65G 7/08

(54) **Multifunktionales Korpus-Handlingsystem**

(30) Priorität: 10.09.1998 DE 19841364
(71) Anmelder: Otto, Andreas, 30989 Gehrden (DE)
(72) Erfinder: Otto, Andreas, 30989 Gehrden (DE)
(74) Vertreter: Wördemann, Hermes, Dipl.-Ing.

(57) **Zusammenfassung**

Multifunktionales Korpus-Handlingsystem mit einer Rohrsäule (101;200;504;603;901), welche eine vertikale Aussparung (219) aufweist, mit innerhalb der Rohrsäule (101;200;504;603;901) sich gegenüber angeordneten vertikalen Antriebseinheiten (205,202,201,206,220,221,222), mit einer durch die vertikale Aussparung (219) herausragenden Hauptwelle (112;203), die von den vertikalen Antriebseinheiten (205,202,201,206,220,221,222) in ihrer vertikalen Lage verändert als auch durch diese axial gedreht werden kann, und mit einem an der Hauptwelle (112;203) befestigten Flansch (109;211).

## Beschreibung

Die Erfindung betrifft ein universell einsetzbares Korpus-Handlingsystem.

### Stand der Technik

In der Möbelfertigung werden insbesondere Büroschränke, Kleider- und Küchenschränke etc. in sogenannten Möbelpressen gefertigt. Nach dem die Kastenmöbel verpresst worden sind, werden sie durch geeignete Maschinen von den Möbelpressen zu vorgesehenen Endmontagebänder verbracht. Dazu ist es erforderlich, die Kastenmöbel in die gewünschte Lageposition zu verbringen, daß heißt, sie nach Austritt aus eine Möbelpresse aufzurichten, sie gegebenenfalls vertikal oder horizontal zu drehen und sie an nachfolgende Bänder zu übergeben.

Es ist Stand der Technik, dafür eine Vielzahl von speziellen Geräten einzusetzen, wie sie zum Beispiel von der Firma Comil Biesse Group, Italien angeboten werden. So wird für die Aufrichtung der Kastenmöbel, wenn sie aus der Möbelpresse gefördert werden, ein spezieller Korpusaufrichter mit entsprechendem Bandvorschub verwendet. An diesen Korpusaufrichter kann sich dann zum Beispiel ein verfahrbares und drehbares Vorschubband anschließen. Um eventuell Höhenunterschiede von vorhanden Vorschubbändern auszugleichen, werden Hebebühnen mit eigenem Vorschub eingesetzt.

Um nach dem Stand der Technik ein Kastenmöbel von der Presse an die Endmontage zu übergeben, sind somit etliche nur für einen bestimmten Zweck geeignete Maschinen bzw. Transportbänder vorzusehen. Sobald zum Beispiel ein neues Produkt eine andere Handhabung erfordert, sind größere Veränderungen an der vorhandenen Struktur erforderlich. Zudem ist ein großer Platzbedarf gegeben. Die Verwendung von einer Mehrzahl nur für einen bestimmten Zweck geeigneten Maschinen ist zudem sehr kostspielig und mit einem großen Zeitablauf verbunden.

### Erfindung

Der Erfindung liegt die Aufgabe zugrunde, eine Handlingsystem für Korpusmöbel anzugeben, welches multifunktional ist und sich leicht an veränderte Bedürfnisse anpassen läßt.

Diese Aufgabe wird bei einem Handlingsystem für Korpusmöbel durch die im Anspruch 1 angegebenen Merkmale gelöst.

Weiterbildungen und vorteilhafte Ausgestaltungen der Erfindung ergeben sich aus den weiteren Ansprüchen, der Beschreibung und der Zeichnung.

Das multifunktionale Korpus-Handlingsystem besteht erfindungsgemäß aus einer Rohrsäule, welche eine vertikale Aussparung aufweist. Innerhalb der Rohrsäule befinden sich gegenüber angeordnete vertikale Antriebseinheiten. Durch die vertikale Aussparung ragt eine Hauptwelle heraus. Die Hauptwelle kann von den vertikalen Antriebseinheiten in ihrer vertikalen Lage verändert als auch durch diese axial gedreht werden. An der Hauptwelle ist ein Flansch befestigt.

In einer Ausgestaltung der Erfindung weist die Rohrsäule zwei vertikale einander gegenüberliegenden Aussparung auf, durch die die Hauptwelle herausragt. An die Hauptwelle ist vorteilhaft ein Gegengewicht angeflanscht.

Vorzugsweise ist an das Gegengewicht eine regelbare Bremseinheit angeordnet. Dadurch wird eine gleichmäßige Rotationsbewegung erzielt sowie eine genaue Einhaltung des gewünschten Schwenkwinkels und einer Positionierung.

Um eine gleichmäßige vertikale Bewegung der Hauptwelle zu garantieren, ist an der Bremseinheit ein gegen die Rohrsäule wirkendes Gegenlager angeordnet.

Um eine Rotationsbewegung mit der vertikalen Antriebseinheiten zu erzielen, sind die Antriebseinheiten mit einer Synchronisationswelle über Verbindungsmittel verbunden. Dazu sind die Verbindungsmittel an je einem vertikal beweglichen Schlitten der vertikalen Antriebseinheiten befestigt. Die Synchronisationswelle weist Umlenkrollen und die Hauptwelle zwei Kettenräder auf, über die die Verbindungsmittel (206) gelenkt werden. Werden die Antriebseinheiten asynchron betätigt, wird eine Rotationsbewegung der Hauptwelle erreicht. Je nach Betätigung der Antriebseinheiten kann eine ausschließlich vertikale, eine gemischt vertikale und rotierende als auch nur eine rotierende Bewegung der Hauptwelle erzielt werden.

In einer weiteren Ausgestaltung der Erfindung ist die Rohrsäule auf einem Bodenstativ mit integriertem Drehkranz angeordnet. Dadurch wird zusätzlich ein Schwenken der Rohrsäule erreicht.

Um auf Bodenniveau herab senken zu können, kann das erfindungsgemäße Korpus-Handlingsystem auf einem Bodenstativ mit nach vorne verkürzte Ausleger montiert werden. Um die erforderliche Stabilität zu gewährleiste, weist das Stativ vorzugsweise ein Gegengewicht auf.

Bei dem Korpus-Handlingsystem mit Bodenstativ mit integriertem Säulendrehkranz weist das Bodenstativ eine mit diesem festverbundenen Platte auf, mit der ein Lagerflansch des Säulendrehkranzes verbunden ist. Dadurch wird eine niedrige Bauweise mit der erforderlichen Stabilität erzielt.

Vorzugsweise weist eine Drehplatte des Säulendrehkranzes eine Positionierbremse auf, um bei einer Drehbewegung mit unterschiedlichen Lasten eine genaue Positionierung zu gewährleisten.

Um die Drehbewegung zu erzielen, ist der Säulendrehkranz mit einer Antriebseinheit verbunden.

Für den universellen Einsatz des erfindungsgemäßen Korpus-Handlingsystem zu erzielen, ist an dem Flansch eine Fördereinrichtung angebracht. Die Fördereinrichtung besteht aus einem horizontalen Teil und einem vertikalen Teil.

In einer vorzugsweisen Ausgestaltung der Erfindung ist der vertikale Teil um 3 * 90° und der horizontale Teil um 180° klappbar. Die Fördereinrichtung ist erfindungsgemäß derart aufgebaut, daß sowohl auf der Unterseite wie auf der Oberseite gefördert werden kann. Dadurch können sämtliche benötigten Positionen im Förderbetrieb abgedeckt werden.

Die Fördereinrichtung weist für den vertikalen Teil und den horizontalen Teil je einen linearen Antrieb mit Antriebsmitteln, vorzugsweise Kettenantrieb, und je ein Endrollenpaar auf, über die die Antriebsmittel geführt werden.

Um auch bei schweren Möbeln eine genaue Positionierung zu erzielen, weist der horizontale Teil Versteifungsmittel auf.

Die Fördereinrichtung kann als Rollenbahn oder als Bandtransport ausgebildet sein. Bei der Verwendung einer Rollenbahn ist ein eigener Antrieb nicht erforderlich.

Um eine Absenkung auf Bodenniveau zu erzielen, ist in einer weiteren Ausgestaltung der Erfindung der vertikale Teil der Fördereinrichtung als Gabel oder Platte ausgebildet. Bei der Verwendung einer Gabel kann ein Möbel auf einem Möbelhund abgesetzt werden. Bei der Verwendung einer vorzugsweise durch Sicken versteiften Platte ist die Absetzung des Möbels auf den Boden möglich.

Als Antriebe können bei dem multifunktionalen Korpus-Handlingsystem neben pneumatischen Linearantrieben auch motorisch, hydraulische oder elektromechanische Antriebe verwendet werden.

Vorzugsweise kann das multifunktionale Korpus-Handlingsystem auf einem Schienensystem angeordnet sein. Jedoch ist auch ein computergesteuertes Radsystem verwendbar.

Das multifunktionale Korpus-Handlingsystem ist eine sehr kostengünstige Lösung mit einem geringen Platzbedarf mit einer schnellen Handhabung.

### Beispiel einer Ausführung der Erfindung.

Nachfolgend wird die Erfindung anhand der Zeichnung näher erläutert.

In der Zeichnung zeigen:
- Fig. 1: Handlingsystem für Korpusmöbel;
- Fig. 2a: vertikale Antriebseinheit, 1. Ansicht;
- Fig. 2b: vertikale Antriebseinheit, 2. Ansicht;
- Fig. 3: Bodenstativ;
- Fig. 4: Bodenstativ für Absenkung auf Bodenniveau;
- Fig. 5: Säulendrehkranz;
- Fig. 6: Bodenstativ mit integriertem Säulendrehkranz;
- Fig. 7: Bodenstativ mit integriertem Säulendrehkranz;
- Fig. 8: Antrieb für den Säulendrehkranz;
- Fig. 9: Seitenansicht von Figur 8;
- Fig. 10: Fördereinrichtung;
- Fig. 11: Fördereinrichtung mit Laufband;
- Fig. 12: Fördereinrichtung mit Rollenbahn.

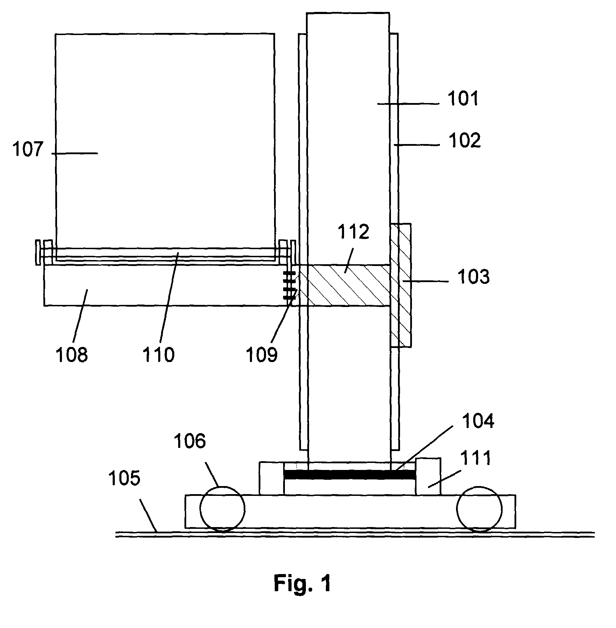

Figur 1 zeigt ein Ausführungsbeispiel eines Handlingsystems für Korpusmöbel. Ein Rohrsäule 101 mit eine im unteren Bereich angeordneten Drehkranz 104 weist eine Hauptwelle 112 auf, welche an ihrer einen Seite ein Gegenlager 103 und auf der gegenüberliegenden Seite eine Flansch 109 besitzt. Die Rohrsäule 101 weist im Bereich der Hauptwelle 112 vertikale Aussparungen auf. Beidseitig der aus der Rohrsäule 101 herausragenden Hauptwelle 112 sind Führungsprofile 102 angeordnet. Am Flansch 109 ist eine Fördereinrichtung mit einem horizontalen Band 108 und einem vertikalen Band 107 angebracht. Die Fördereinrichtung kann als Laufband 110 oder auch als Rollenbahn ausgebildet sein. Die Rohrsäule 101 mit dem im unteren Bereich angeordneten Drehkranz 104 ist mit einem Bodenstativ 111 verbunden, welches vorzugsweise Laufräder 106 besitzt, die auf einer Schiene 105 fahrbar sind.

Das erfindungsgemäße Handlingsystems für Korpusmöbel kann Möbel sowohl vertikal anheben als auch axial schwenken. Durch die mögliche Drehbewegung der Rohrsäule 101 ist auch eine horizontale Lageänderung der Möbel möglich. Durch die Ausgestaltung für die Bewegung auf Schienen können die Möbel zu jedem gewünschten Ort in jeder gewünschten Lage verbracht werden.

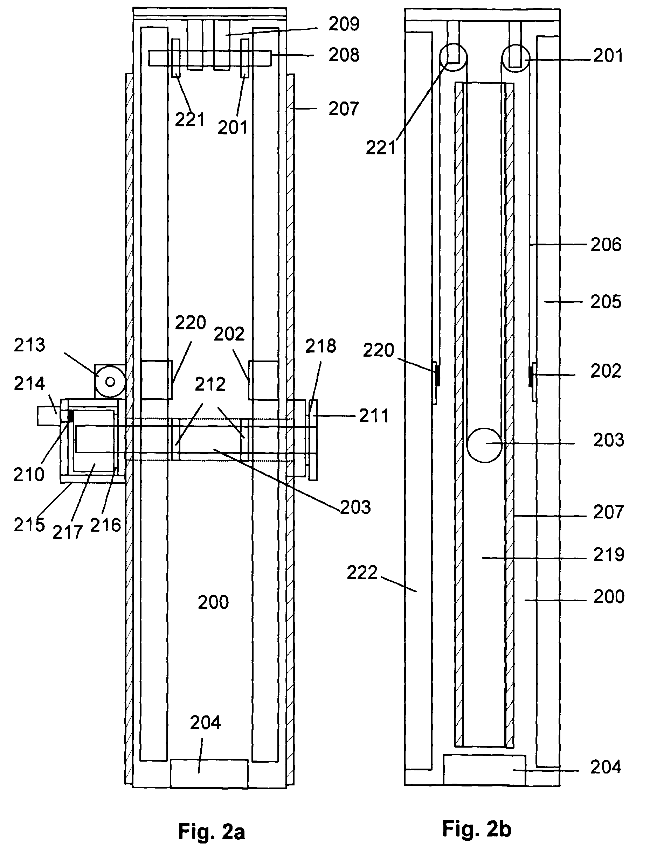

Figur 2a zeigt eine vertikale Antriebseinheit in einer ersten Ansicht und Figur 2b in einer dazu um 90° versetzten Ansicht. Eine Rohrsäule 200 weist gegenüberliegende Linearantriebe 205, 222 mit Schlitten 202, 220 auf. Die Rohrsäule 200 besitzt eine Aussparung 219, durch die eine Hauptwelle 203 nach außen der Rohrsäule 200 ragt. An den Schlitten 202, 220 der Linearantriebe 205, 222 sind Verbindungsmittel 206, vorzugsweise eine Kette, angebracht, die über Umlenkrollen 201, 221 und über Kettenräder 212 der Hauptwelle 203 führen. Die Rohrsäule 200 ist auf einem Säulendrehkranz 204 drehbar befestigt. Die Hauptwelle 203 wird bei ihrem Austritt aus der Rohrsäule 200 durch Führungsprofile 207 gelagert. Die Umlenkrollen 201, 221 sind auf einer Synchronisationswelle 208 angeordnet. Die Synchronisationswelle 208 ist über ein Lager 209 mit der Rohrsäule 200 verbunden. An der einen Seite der Hauptwelle 203 ist ein Flansch 211 mit Gleitlager 218, an der anderen Seite ein Gegengewicht 217 vorhanden. An der Seite mit dem Gegengewicht 217 befindet sich ein Rahmen 215 mit einem Bremszylinder 214 und Bremsklotz 210. Ein Gleitlager 216 zur Kraftaufnahme der Bremse sowie ein Gegenlager 213 gewährleisten eine gute vertikale Beweglichkeit der Anordnung.

Durch die Linearantriebe 205, 222 sowie der Synchronisationswelle 208 wird erreicht, daß die Hauptwelle 203 sowohl vertikal als auch horizontal rotierend bewegt werden kann.

Werden die Linearantriebe 205, 222 asynchron betätigt, wird eine Rotationsbewegung der Hauptwelle 203 erreicht. Je nach Betätigung der Linearantriebe 205, 222 kann eine ausschließlich vertikale, eine gemischt vertikale und rotierende als auch nur eine rotierende Bewegung der Hauptwelle 203 erzielt werden.

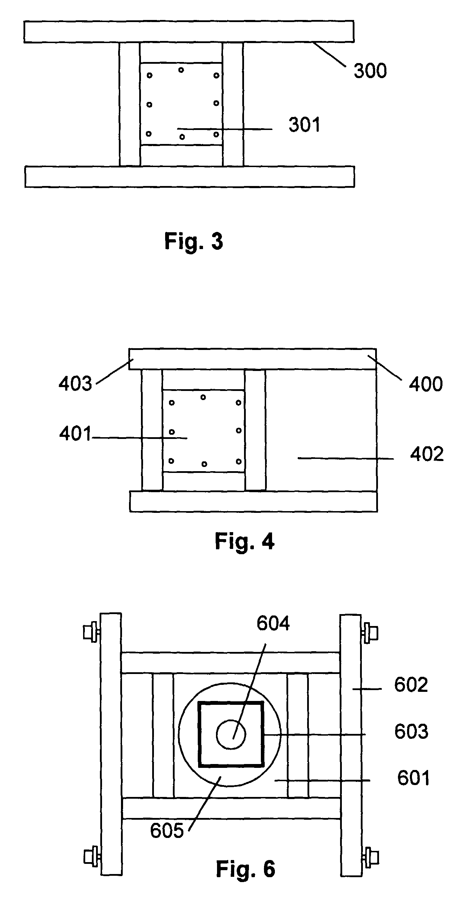

Figur 3 zeigt ein Bodenstativ mit einem Rohrstativ 300 sowie einer Grundplatte 301 vorzugsweise für die Verwendung im Stationärbetrieb mit nur einem nachfolgenden Band.

Figur 4 zeigt ein Bodenstativ für Absenkung auf Bodenniveau mit einem Rohrstativ 400 sowie einer Grundplatte 401. Ausleger 403 des Rohrstativs 400 sind asymmetrisch. Es ist ein Gegengewicht 402 zum Ausgleich vorgesehen.

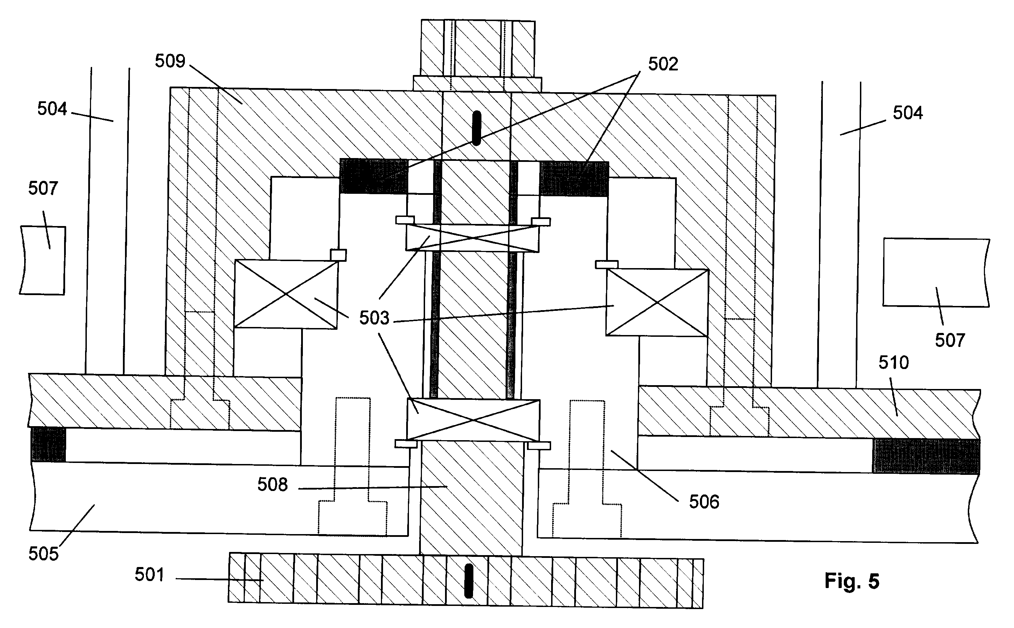

Figur 5 zeigt einen Aufbau eines Drehkranzes. Auf einer gelagerten Welle 508 ist auf der unteren Seite ein Antriebsrad 501 und auf der oberen Seite ein Säulendrehkranz 509 angebracht. Mit dem Säulendrehkranz 509 ist eine Gegenplatte 510 verbunden, auf die eine Rohrsäule 504 befestigt ist. Ein Lagergehäuse 506 ist mit dem unteren Teil eines Bodenstativs 505 verbunden. Als Lager 502, 503 können sowohl Gleit- als auch Kugellager verwendet werden.

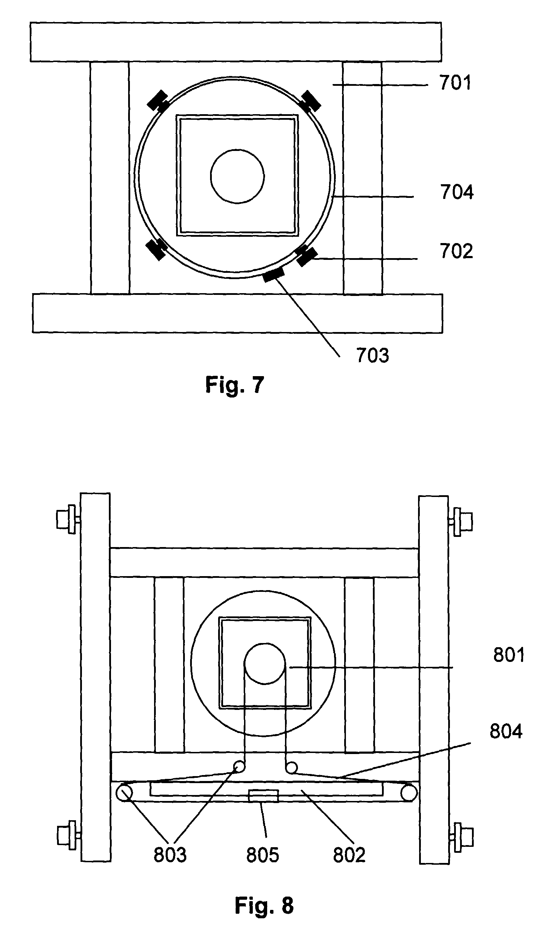

Figur 6 zeigt ein Bodenstativ mit integriertem Drehkranz gemäß Figur 5. In einem Rohrstativ 602 ist eine Drehplatte 601 angeordnet, welche eine kreisförmige Aussparung für die Welle 508 gemäß Figur 5 aufweist. Mit einem Säulendrehkranz 604 ist eine Rohrsäule 603 verbunden. Unterhalb der Drehplatte 601 ist eine Gleitlagerplatte 605 angeordnet, die gegen die Grundplatte wirkt.

Das Bodenstativ ist vorzugsweise symmetrisch aufgebaut und ist in diesem Beispiel für den Schienenbetrieb ausgelegt.

Figur 7 zeigt eine Draufsicht eines Bodenstativs mit integriertem Drehkranz. Eine Grundplatte 701 mit einer Durchgangsbohrung für die Welle 508 zeigt Gegenlager 702 einer Drehplatte 704 der Rohrsäule mit Positionierungsbremse 703.

Figur 8 zeigt ein Antrieb für den Drehkranz, wie er in der Figur 5 beschrieben ist. Ein Säulendrehkranz 801 ist über Umlenkrollen 803 durch eine Kette 804 mit einem Schlitten 805 eines Linearantrieb 802 verbunden. Durch diese Anordnung ist eine positionsgenaue Drehbewegung bis zu 360° der Rohrsäule möglich. Auch bei diesem Ausführungsbeispiel ist das Bodenstativ auf Schienen fahrbar ausgestaltet.

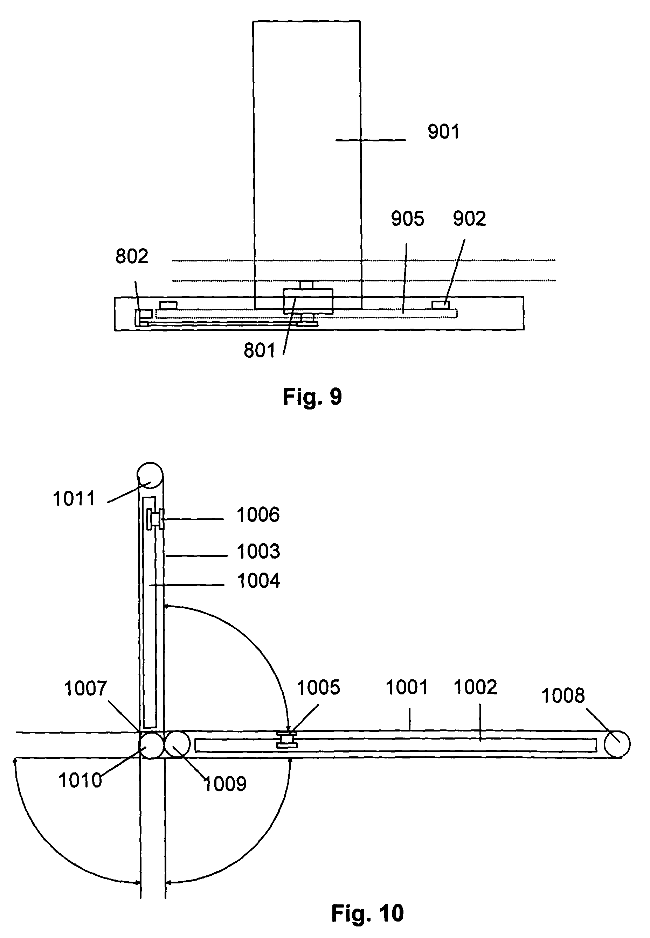

Figur 9 zeigt ein Seitenansicht von Figur 8. Eine Rohrsäule 901 ist auf dem Säulendrehkranz 801 drehbar befestigt. Eine Gegenlagerplatte 905 mit Gegenlager 902 bewirkt die Stabilität der Anordnung. Der Linearantrieb 802 sorgt für die gewünschte Rotation der Rohrsäule 901.

Figur 10 zeigt ein Fördereinrichtung für einen universellen Einsatz. Die Fördereinrichtung besteht aus einem horizontalen Band 1001 und einem vertikalen Band 1003, die über ein Gelenk 1007 miteinander verbunden sind. Das horizontale Band 1001 besitzt einen Linearantrieb 1002 mit einem Schlitten 1005, an dem eine Kette befestigt ist. Die Kette führt über Endrollen 1008, 1009. Das vertikale Band 1003 besitzt einen Linearantrieb 1004 mit einem Schlitten 1006, an dem ebenfalls eine Kette befestigt ist. Diese Kette führt über Endrollen 1010, 1011.

In der gezeichneten Darstellung kann diese Fördereinrichtung als Aufrichter verwendet werden. Wenn das vertikale Band 1003 um 90° zum horizontalen Band 1001 hin geschwenkt wird, kann die untere Seite des horizontalen Bandes 1001 als Durchlaufband verwendet werden. Wird hingegen das horizontalen Band 1001 bzw. das vertikale Band 1003 um 180° geschwenkt, können Möbel gegen die Laufrichtung aufgerichtet werden. Dies ist dann erforderlich, wenn die Möbel zum Beispiel mit Möbelfüßen gefertigt und kopfüber transportiert werden müssen. Durch die Drehbarkeit bzw. Fahrbarkeit des Korpus-Handlingsystems ist zudem ein gewünschter Weitertransport gesichert.

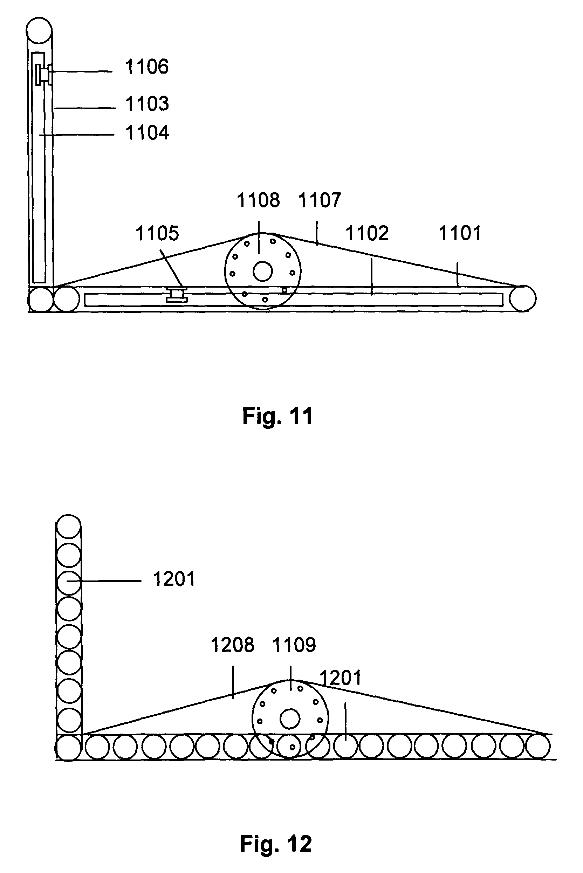

Figur 11 zeigt ein Fördereinrichtung mit Laufband. Die Fördereinrichtung besteht aus einem horizontalen Band 1101 und einem vertikalen Band 1103. Das horizontale Band 1001 besitzt einen Linearantrieb 1102 mit einem Schlitten 1105, an dem eine Kette befestigt ist. Das vertikale Band 1103 besitzt einen Linearantrieb 1104 mit einem Schlitten 1006. Das horizontale Band 1001 weist eine Verstärkung 1107 im Bereich eines Flansches 1108 auf.

Figur 12 zeigt ein Fördereinrichtung mit Rollenbahn. Auch hier weist die horizontale Rollenbahn 1201 weist eine Verstärkung 1207 im Bereich eines Flansches 1208 auf.

Die Verwendung einer Rollenbahn hat den Vorteil, daß ein eigener Antrieb für die Bewegung der Möbel auf der Fördereinrichtung nicht erforderlich ist. Schon leichte Kippbewegungen reichen aus, um das Möbel in gewünschten Positionen zu bringen.

## Patentansprüche

1. Multifunktionales Korpus-Handlingsystem mit einer Rohrsäule (101; 200; 504; 603; 901), welche eine vertikale Aussparung (219) aufweist, mit innerhalb der Rohrsäule (101; 200; 504; 603; 901) sich gegenüber angeordneten vertikalen Antriebseinheiten (205, 202, 201, 206, 220, 221, 222), mit einer durch die vertikale Aussparung (219) herausragenden Hauptwelle (112; 203), die von den vertikalen Antriebseinheiten (205, 202, 201, 206, 220, 221, 222) in ihrer vertikalen Lage verändert als auch durch diese axial gedreht werden kann, und mit einem an der Hauptwelle (112; 203) befestigten Flansch (109; 211).

2. Korpus-Handlingsystem nach Anspruch 1, dadurch gekennzeichnet, daß die Rohrsäule (101; 200; 504; 603; 901) zwei vertikale einander gegenüberliegenden Aussparung (219) aufweist, durch die die Hauptwelle (112; 203) herausragt.

3. Korpus-Handlingsystem nach Anspruch 1 oder Anspruch 2, dadurch gekennzeichnet, daß an die Hauptwelle (112; 203) ein Gegengewicht (217) angeflanscht ist.

4. Korpus-Handlingsystem nach Anspruch 3, dadurch gekennzeichnet, daß an das Gegengewicht (217) eine regelbare Bremseinheit (210, 214, 215) angeordnet ist.

5. Korpus-Handlingsystem nach Anspruch 4, dadurch gekennzeichnet, daß an der Bremseinheit (210, 214, 215) ein gegen die Rohrsäule (101; 200; 504; 603; 901) wirkendes Gegenlager (213) angeordnet ist.

6. Korpus-Handlingsystem nach Anspruch 1, dadurch gekennzeichnet, daß die vertikalen Antriebseinheiten (205, 202, 201, 206, 220, 221, 222) mit einer Synchronisationswelle (208) über Verbindungsmittel (206) verbunden ist.

7. Korpus-Handlingsystem nach Anspruch 6, dadurch gekennzeichnet, daß die Verbindungsmittel (206) an je einem vertikal beweglichen Schlitten (202, 220) der vertikalen Antriebseinheiten (205, 202, 201, 206, 220, 221, 222) befestigt sind, daß die Synchronisationswelle (208) Umlenkrollen (201, 221) und die Hauptwelle (112; 203) zwei Kettenräder (212) aufweist, über die die Verbindungsmittel (206) gelenkt werden.

8. Korpus-Handlingsystem nach einem der voranstehenden Ansprüche, dadurch gekennzeichnet, daß die Rohrsäule (101; 200; 504; 603; 901) auf einem Bodenstativ (Fig. 4; Fig. 6) mit integriertem Säulendrehkranz (204; Fig. 5; 604; 801) angeordnet ist.

9. Korpus-Handlingsystem nach Anspruch 8, dadurch gekennzeichnet, daß das Bodenstativ (Fig. 4) nach vorne verkürzte Ausleger (403) aufweist vorzugsweise mit einem Gegengewicht (402).

10. Korpus-Handlingsystem nach Anspruch 8 oder 9, dadurch gekennzeichnet, daß das Bodenstativ eine Grundplatte (301; 401; 701) aufweist, auf die ein Lagergehäuse (506) befestigt ist, daß die Grundplatte (301; 401; 701) mit einer Durchgangsbohrung für eine Welle (508) versehen ist, daß auf der Welle (508) ein Säulendrehkranz (204; 509; 604; 801) befestigt und daß mit dem Säulendrehkranz (204; 509; 604; 801) die Rohrsäule (101; 200; 504; 603; 901) verbunden ist.

11. Korpus-Handlingsystem nach Anspruch 10, dadurch gekennzeichnet, daß eine Drehplatte (510; 605) mit dem Säulendrehkranz (204; 509; 604; 801) verbunden ist und eine Positionierbremse (703) aufweist.

12. Korpus-Handlingsystem nach einem der voranstehenden Ansprüche 8 bis 11, dadurch gekennzeichnet, daß der Säulendrehkranz (204; 509; 604; 801) mit einer Antriebseinheit (802; 803; 805) verbunden ist.

13. Korpus-Handlingsystem nach Anspruch 1, dadurch gekennzeichnet, daß an dem Flansch (109; 211) eine Fördereinrichtung (Fig. 10) angebracht ist.

14. Korpus-Handlingsystem nach Anspruch 13, dadurch gekennzeichnet, daß die Fördereinrichtung (Fig. 10) aus einem horizontalen (1001) und einem vertikalen Teil (1003) besteht.

15. Korpus-Handlingsystem nach Anspruch 14, dadurch gekennzeichnet, daß der vertikale Teil (1003) um 90° und der horizontale Teil (1001) um 180° klappbar sind.

16. Korpus-Handlingsystem nach Anspruch 13 oder 14, dadurch gekennzeichnet, daß die Fördereinrichtung (Fig. 10) derart aufgebaut ist, daß sowohl auf der Unterseite wie auf der Oberseite gefördert werden kann.

17. Korpus-Handlingsystem nach Anspruch 16, dadurch gekennzeichnet, daß die Fördereinrichtung (Fig. 10) für den vertikalen Teil (1003) und den horizontalen Teil (1001) je einen linearen Antrieb (1002, 1004) mit Antriebsmitteln, vorzugsweise Kettenantrieb, und je einem Endrollenpaar (1008, 1009; 1010, 1011) aufweist, über die die Antriebsmittel geführt werden.

18. Korpus-Handlingsystem nach einem oder mehreren der voranstehenden Ansprüche 14 bis 17, dadurch gekennzeichnet, daß der horizontale Teil (1001) Versteifungsmittel (1107; 1208) aufweist.

19. Korpus-Handlingsystem nach einem oder mehreren der voranstehenden Ansprüche 13 bis 18, dadurch gekennzeichnet, daß die Fördereinrichtung (Fig. 10) als Rollenbahn oder als Bandtransport ausgebildet ist.

20. Korpus-Handlingsystem nach einem oder mehreren der voranstehenden Ansprüche 14 bis 17, dadurch gekennzeichnet, daß der vertikale Teil (1003) der Fördereinrichtung (Fig. 10) als Gabel oder Platte ausgebildet ist.
